# EUROPEAN PATENT APPLICATION

(11) **EP 1 975 568 A2**
(43) Date of publication of application: **01.10.2008**
(21) Application number: 07252663.5
(22) Date of filing: 02.07.2007
(51) Int. Cl.: G01C 21/36, G08G 1/0968

(54) **Crossroad guide method in a navigation system**

(30) Priority: 29.03.2007 KR 20070030794
(71) Applicant: SK C&C Co., Ltd., Jung-gu Seoul 100-711 (KR)
(72) Inventor: Chu, Kyung Wan, Seongnam-si Gyeonggi-do (KR)
(74) Representative: Powell, Timothy John

(57) **Abstract**

A method for providing crossroad information using a navigation system mounted to a vehicle includes searching a map database to extract information on a driving route to a destination, extracting information on crossroads present in the driving route, and providing a drive guide image to a display panel, the driving guide image including a map of an area around a current position of the vehicle, a traveling direction in the driving route and a number of remaining crossroads, wherein the number of remaining crossroads decreases each time the vehicle passes through the remaining crossroads. The method further includes providing a turn symbol which indicates a target turning direction of the vehicle and representing the turn symbol at or around a road intersection of a turning point in the drive guide image, when the vehicle passes through a last remaining crossroad left before the turning point.

## Description

The present invention relates in general to a method of providing driving guide information via a navigational system, and more particularly, to a crossroad guide method in a navigation system adapted to provide a driver with information on the number of crossroads that is remaining before a pre-selected destination.

As it is now well-known in the art, a navigation system can be mounted to a vehicle or the like and is designed to receive current coordinate information from earth-orbiting satellites of a GPS (Global Positioning System) through a built-in or optionally mounted GPS receiver. Based on the coordinate information thus received, the navigation system can provide various useful information to the driver such as: a current position of the vehicle, a traveling direction of the vehicle, a distance to the destination, a traveling speed of the vehicle, a driving route selected by a driver prior to commencement of driving, and an optimum driving route to the destination.

Further, a navigation system mounted to a vehicle or the like can provide a driver with various images such as symbols indicative of various turns (a right turn, a left turn, etc.) in a crossroad, symbols indicating the distance to a turning point, and symbols indicating a direction guide.

However, the driver still knows nothing about the number of crossroads left before the final destination and must resort to relying solely on the distance information in determining the turning points.

For this reason, the conventional navigation method poses a problem in that the driver encounters great difficulty in finding an actual turning point, if a road network is very complex or if crossroads exist one after another, such a problem can be detrimental to a safe driving.

Therefore, there is a need in the art for a navigation system that can provide a driver with the number of crossroads remaining before a pre-selected destination.

It is, therefore, an object of the present invention to provide a crossroad guide method in a navigation system capable of providing a driver with information on the number of crossroads left before a next turning point in a driving route.

Another object of the present invention is to provide a crossroad guide method in a car navigation system capable of providing a driver with information on a branch road extending in the same direction as a next turning direction between a next turning point and a last crossroad left before the next turning point.

A further object of the present invention is to provide a crossroad guide method in a car navigation system capable of providing a driver with aurally recognizable information on a last crossroad left before a next turning point.

In accordance with an embodiment of the present invention, there is provided a method for providing crossroad information using a navigation system mounted to a vehicle, comprising:
searching a map database to extract information on a driving route to a destination if the destination is selected in the navigation system;
extracting information on crossroads present in the driving route;
providing a drive guide image to a display panel, the driving guide image including a map of an area around a current position of the vehicle, a traveling direction in the driving route and a number of remaining crossroads, wherein the number of remaining crossroads decreases each time the vehicle passes through the remaining crossroads; and
providing a turn symbol which indicates a target turning direction of the vehicle and representing the turn symbol at or around a road intersection of a turning point in the drive guide image, when the vehicle passes through a last remaining crossroad left before the turning point.

The above and other objects and features of the present invention will become apparent from the following description of preferred embodiments, given in conjunction with the accompanying drawings, in which:
Fig. 1 is a block diagram of a navigation system for providing crossroad guide information in accordance with the present invention.
Fig. 2 is a flowchart illustrating a crossroad guide method in accordance with the present invention;
Fig. 3 is an exemplary view of a drive guide image including information on the number of crossroads, which is displayed on a display panel in accordance with a crossroad guide method of the present invention;
Fig. 4 is an exemplary view of a drive guide image including a turn symbol, which is displayed on a display panel in accordance with a crossroad guide method of the present invention;
Figs. 5A and 5B are conceptual views illustrating information on a branch road extending in the same direction as a next turning direction between a next turning point and a last crossroad left before the next turning point.

Hereinafter, embodiments of the present invention will be described in detail with reference to the accompanying drawings.

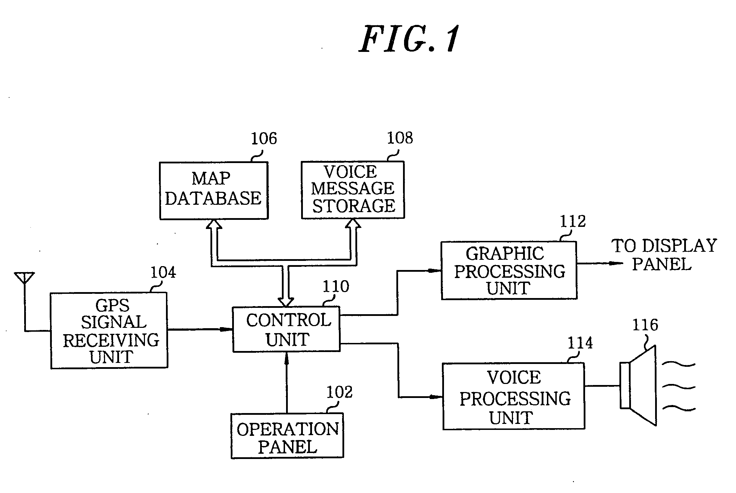

Referring to Fig. 1, there is shown a block diagram of a navigation system for providing crossroad information in a navigation mode in accordance with the present invention. The navigation system includes an operation panel 102, a GPS signal receiving unit 104, a map database 106, a voice storage 108, a control unit 110, a graphic processing unit 112, a voice processing unit 114 and a speaker 116.

The operation panel 102 is typically a touch screen display. However, operation panel 102 may be a regular display without the touch function, or any other screen display obvious to one skilled in the art that is capable of displaying the required information, such as an LCD type display, plasma type display, OLED type display, LCoS type display, DLP type display, CRT type display or the like. Through the operation panel 102, a user or driver can make various kinds of selection operations required in driving a vehicle, e.g., a destination, a driving route, a map search for finding a specified point on a map. Selection signals generated by the user's operation are supplied to the control unit 110. Examples of a driving route selected by the user include an optimum route, a shortest route, a public transportation route, a speed priority route and a scenery priority route.

The GPS signal receiving unit 104 includes a GPS signal receiving antenna, a satellite signal processor and any other devices obvious to one skilled in the art that are designed to process satellite signals. The GPS signal receiving unit 104 serves to process satellite signals received at a predetermined time interval from GPS satellites (not shown) and transfer current coordinate information thus obtained to the control unit 110.

Map data required in providing a navigation service are stored in the map database 106 and various kinds of voice guidance message for a voice guidance event are stored in the voice storage 108. The map data and the voice guidance message are supplied to the control unit 110 so that they can be used in providing the navigation service. In this connection, the map data stored in the map database 106 includes information on major crossroads lying along principal roads and information on a branch road (i.e., a narrow road permitting passage of a vehicle or a subordinate road) existing between the major crossroads.

A definition of the major crossroads may vary depending on a road situation in a specified area. As the occasion demands, the major crossroads lying along principal roads (e.g., T-junction roads) can be defined to include: (A) all divergence points of an expressway (divergence points between a main line and a main line, a main line and an interchange, a main line and a junction, and a junction and a junction) except for a point connected to a service area link; (B) all divergence points of an urban highway lying along a four or more lane road; and (C) all divergence points of an ordinary way where roads of six or more lane or roads of four or more lane with traffic lights are met with each other (crossroad links being treated independently).

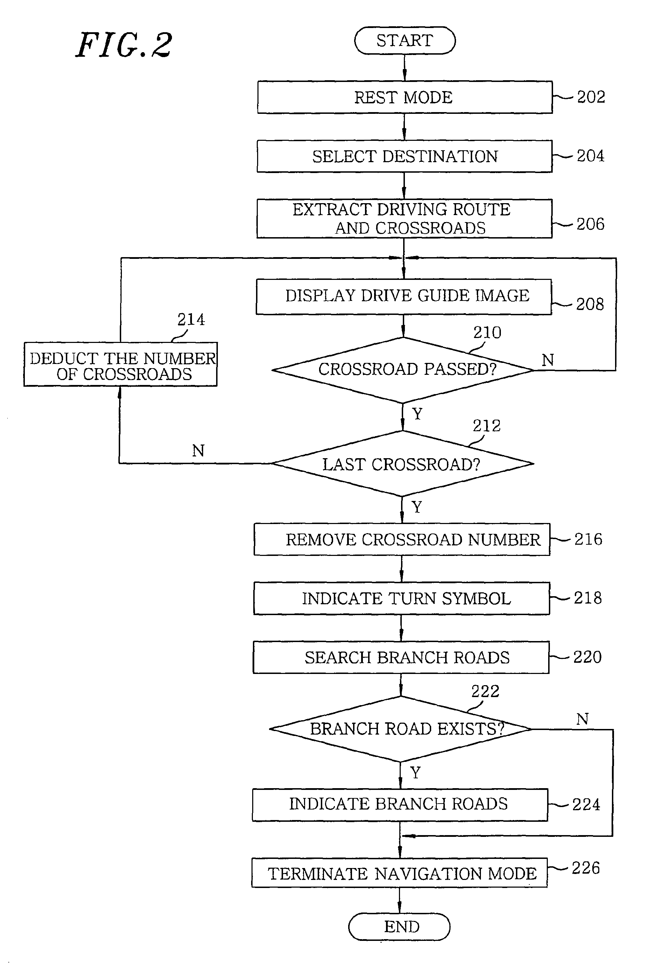

The control unit 110 includes, e.g., a microprocessor for performing an overall control operation in a navigation system. As a command for a navigation mode to be executed is given by selecting a destination through the operation panel 102, the control unit 110 searches the map database 106 and extracts information on a driving route selected by a user (e.g., an optimum route, a shortest route, a popular transportation route, a speed priority route and a scenery priority route). The control unit 110 also extracts information on crossroads existing in the driving route. Based on the information thus extracted, the control unit 110 prepares a drive guide image including a surrounding area, a traveling direction and a remaining crossroad number and supplies the drive guide image to the graphic processing unit 112. If a voice guidance event is needed, the control unit 110 draws voice guidance message from the voice storage 108 and supplies the data to the voice processing unit 114. Concrete operations of the control unit 110 will be described later in detail with reference to Fig. 2.

By graphically processing the map data received from the control unit 110, the graphic processing unit 112 generates a drive guide image including, e.g., information on an area around the current vehicle position, the traveling direction and the remaining crossroad number. The drive guide image is transferred to and displayed on a display panel not shown in the drawings.

The voice processing unit 114 converts voice guidance message electively provided from the control unit 110 when the navigation system operates in a navigation mode to analog voice signals. Examples of the voice guidance message include message for allowing a user to aurally recognize the passage of a vehicle through major crossroads and message for enabling the user to aurally recognize the passage of the vehicle through a last crossroad left before a turning point. In the voice processing unit 114, the analog voice signals are subject to processing such as amplification to a predetermined level and/or noise removal reduction. The voice signals, i.e., voice guidance messages are provided to the speaker 116 which may be either a speaker of an audio/video device or an audio device mounted to the vehicle or a speaker built in the navigation system.

Fig. 2 is a flowchart illustrating a crossroad guide method in a navigation mode in accordance with one embodiment of the present invention.

Referring to Fig. 2, if the navigation system mounted to a vehicle operates in a rest mode (step 202) and if a user or driver inputs a destination and selects a driving route (e.g., an optimum route, a shortest route, a public transportation route, a speed priority route or a scenery priority route) by operating the operation panel (step 204), the control unit 110 searches the map database 106 and extracts the information on the driving route, the crossroads existing in the driving route and the map data for an area around a current vehicle position (step 206). Further extracted by the control unit 110 are information on a distance to the destination and information on a distance to a vehicle turning point.

In this regard, the term "information on crossroads" or its equivalent means information on major crossroads that comply with the predetermined selection criteria set forth above by way of example. The selection criteria of crossroads may be changed depending on the road situation of a relevant area or other conditions.

Next, the information on the map data for a surrounding area, the driving route, the crossroads (or number of the crossroads), the distance to the destination and the distance to the turning point extracted in the control unit 110 are transmitted to the graphic processing unit 112.

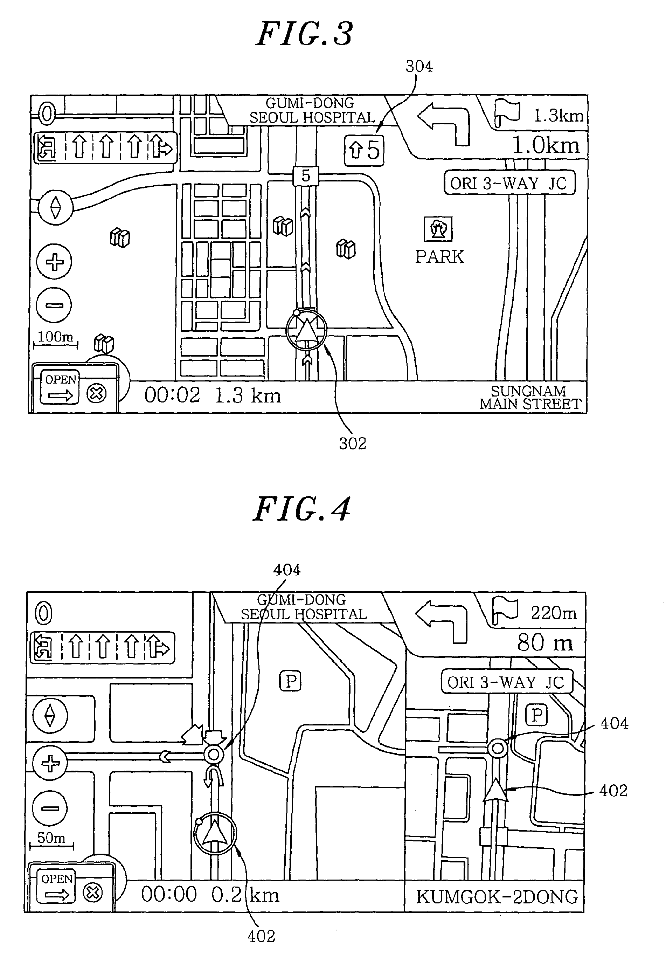

Then, the graphic processing unit 112 generates a drive guide image using the information. The drive guide image is delivered to and consequently displayed on the display panel (not shown) (step 208), as illustrated in Fig. 3. This makes it possible for the driver to recognize driving guide information in respect to a current driving route, including the number of remaining crossroads.

In Fig. 3, reference numeral 302 indicates a current position of the vehicle under driving and reference numeral 304 represents an information region indicative of the number of remaining crossroads that exists between the current vehicle position and the next turning point.

In this connection, the drive guide image displayed on the display panel represents map information that varies with the coordinate information supplied from the GPS signal receiving unit 104 to the control unit 110 as the vehicle moves in the traveling direction.

During execution of the afore-mentioned navigation mode that provides the drive guide image including the information on the number of crossroads existing between the current vehicle position and the next turning point, the control unit 110 checks up whether the vehicle passes through a crossroad (step 210), based on the coordinate information supplied from the GPS signal receiving unit 104, and also checks up whether the crossroad is the last crossroad remaining before the turning point (step 212), if it determined in step 210 that the vehicle has passed the crossroad.

If the results of checking conducted in steps 210 and 212 reveal that the vehicle has passed a crossroad but the crossroad just passed is not the last one, the control unit 110 deducts one from the number of remaining crossroads and supplies the information on the one-deducted crossroad number information to the display panel (not shown) via the graphic processing unit 112 (step 214), as a result of which the one-deducted crossroad number information is indicated in the drive guide image displayed on the display panel.

As shown in Fig. 3 by way of example, if the vehicle passes through one crossroad lying just ahead thereof in a situation that a drive guide image containing the crossroad number of digit "5" is displayed on the display panel, digit "4" obtained by deducting one from five will be indicated in the region of the drive guide image displayed on the display panel.

That is to say, during the time when the vehicle moves toward the destination in the navigation mode, information on the number of remaining crossroads deducted one by one through steps 208 to 214 is offered to the driver.

Although not shown in Fig. 2, it is needless to say that a voice guidance service may be provided to enable the driver to aurally recognize the crossroad passage of the vehicle. As an example, it may be possible to provide the driver with a voice message reading: "The vehicle has just passed the "X-th" crossroad and the number of remaining crossroads is "Y".

If the results of checking conducted in step 212 reveal that the vehicle has passed the last crossroad left before the turning point, the control unit 110 issues to the graphic processing unit 112 a command requesting cancellation of the information on the crossroad number and a command asking for generation of a turn symbol in a region of the drive guide image corresponding to the turning point.

In response, the graphic processing unit 112 creates a new drive guide image in which the crossroad number is cancelled and the turn symbol is indicated at or around a road intersection corresponding to the turning point (steps 216 and 218). The new drive guide image is transferred to and displayed on the display panel, as illustrated in Fig. 4 by way of example. This enables the driver to visually recognize the fact that the vehicle has passed the last remaining crossroad and is approaching to the turning point. In Fig. 4, reference numeral 402 indicates a current position of the vehicle under driving and reference numeral 404 represents a turn symbol indicated at or around a road intersection corresponding to the turning point and adapted to turn in a target turning direction of the vehicle.

In this regard, the turn symbol is a symbol whose color is gradually changed under the control of the control unit 110 as the vehicle approaches to the turning point. The turn symbol is preferable to include a light symbol that is not continuously turned on but flickers to increase visual recognition power.

Instead of gradually changing the color of the turn symbol as the vehicle approaches the turning point, it may be possible to provide a turn symbol rotating at a gradually increasing speed, in which case the turn symbol may be designed to flicker. Any type of turn symbols other than the ones noted above may be employed as long as it can improve visual recognition power.

Although not shown in Fig. 2, it goes without saying that a voice guidance service may be provided to enable the driver to aurally recognize the passage of the last remaining crossroad of the vehicle. As an example, it may be possible to provide the driver with a voice message reading: "Since the vehicle has passed the last crossroad left before the turning point, please drive straight to the turning point".

If the vehicle passes through the last remaining crossroad, the control unit 110 searches the map database 106 to determine whether there is information on a branch road (e.g., a narrow road permitting passage of a vehicle or a subordinate road) extending in the same direction as the next turning direction between the last remaining crossroad and the next turning point (steps 220 and 222).

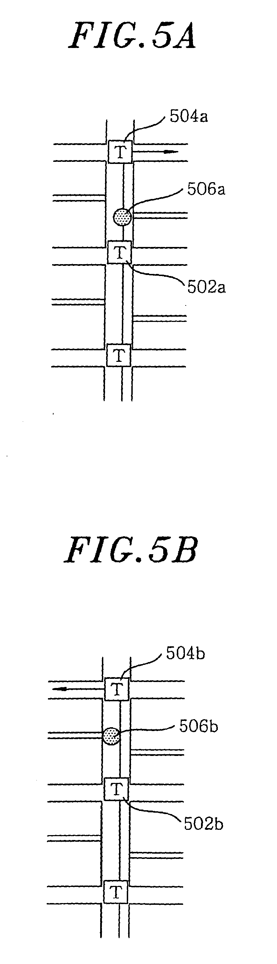

If it is determined in step 222 that there exists the information on a branch road, the information on a relevant branch road and a relevant map data are extracted and then supplied to the graphic processing unit 112. In response, the graphic processing unit 112 generates a drive guide image containing the branch road and the map data and delivers the drive guide image to the display panel, whereby the drive guide image containing a branch road symbol between the last remaining crossroad and the turning point is displayed on the display panel, as illustrated in Figs. 5A and 5B by way of example (step 224). This allows the driver to recognize presence of the branch road extending in the same direction as the next turning direction between the last remaining crossroad and the next turning point.

In this regard, the branch road symbol is indicated in a form different than a crossroad symbol and a turn symbol to assure ease of discrimination. In Figs. 5A and 5B, for example, which are conceptual views illustrating an instance that the vehicle makes a right turn and an instance that the vehicle makes a left turn at the turning point, reference numerals 502a and 502b indicate a symbol of the last remaining crossroad, reference numerals 504a and 504b representing a symbol of the turning point and reference and reference numerals 506a and 506b standing for a symbol of the branch road (subordinate road).

Finally, the navigation system terminates the navigation mode performed thus far (step 226), if the vehicle reaches the destination and if the user turns off the navigation system.

Accordingly, in accordance with the present invention, the driver can clearly recognize the number of crossroads left before the next turning point in the driving route by seeing the driving guide image displayed on the display panel. Thus, even if the crossroads lie closely in a complex pattern, the driver can easily determine the crossroads with no possibility of confusion the crossroad where the vehicle should make a turn. This helps to avoid any unsafe driving that would otherwise occur at a turning point by an error of the driver.

While the invention has been shown and described with respect to the preferred embodiments, it will be understood by those skilled in the art that various changes and modification may be made without departing from the scope of the invention as defined in the following claims.

## Claims

1. A method for providing crossroad information using a navigation system mounted to a vehicle, comprising:
searching a map database to extract information on a driving route to a destination if the destination is selected in the navigation system;
extracting information on crossroads present in the driving route;
providing a drive guide image to a display panel, the driving guide image including a map of an area around a current position of the vehicle, a traveling direction in the driving route and a number of remaining crossroads, wherein the number of remaining crossroads decreases each time the vehicle passes through the remaining crossroads; and
providing a turn symbol which indicates a target turning direction of the vehicle and representing the turn symbol at or around a road intersection of a turning point in the drive guide image, when the vehicle passes through a last remaining crossroad left before the turning point.

2. The method of claim 1, wherein the number of remaining crossroads is indicated in a specified region of the drive guide image.

3. The method of claim 1, wherein the turn symbol is adapted to gradually change its color as the vehicle approaches the turning point.

4. The method of claim 3, wherein the turn symbol is adapted to flicker light.

5. The method of claim 1, wherein the turn symbol is adapted to rotate at a gradually increasing speed as the vehicle approaches the turning point.

6. The method of claim 5, wherein the turn symbol is adapted to flicker.

7. The method of any one of claims 1 to 6, further comprising:
searching the map database to determine whether there is a branch road extending in the same direction as the target turning direction of the vehicle between the last remaining crossroad and the turning point, when the vehicle passes through the last remaining crossroad; and
indicating a branch road symbol indicative of the branch road in a corresponding region of the drive guide image, if the branch road is determined to exist.

8. The method of claim 7, wherein the branch road symbol differs in shape from the turn symbol.

9. The method of any one of claims 1 to 6, further comprising providing an aurally recognizable voice guidance message each time the vehicle passes through one of the remaining crossroads.

10. The method of any one of claims 1 to 6, further comprising providing an aurally recognizable voice guidance message when the vehicle passes through the last remaining crossroad.
